# EUROPEAN PATENT APPLICATION

(11) **EP 0 597 186 A2**
(43) Date of publication of application: **18.05.1994**
(21) Application number: 93112437.4
(22) Date of filing: 03.08.1993
(51) Int. Cl.: G11B 25/04, G11B 33/12

(54) **Hard disk drive memory cassette**

(30) Priority: 13.11.1992 US 975761
(71) Applicant: HEWLETT-PACKARD COMPANY, Palo Alto, California 95831 (US)
(72) Inventor: Drennan, George A., Eagle, Idaho 83616 (US); McAllister, Jeffrey S., Boise, Idaho 83704 (US); Mastache, Mark D., Boise, Idaho 83704 (US); Seymour, Richard, Boise, Idaho 83702 (US)
(74) Representative: Baillie, Iain Cameron

(57) **Abstract**

A hard disk drive memory cassette (1), for insertion into the housing (2) of an electronic digital processor to be connected to the processing system, includes a housing (5) having therewithin at one end, a hard disk drive (6) having a single disk (13) and, at the other end a connector (1 d). A printed circuit board (7) providing control functions, including track seeking, track following and read/write signal timing, normally mounted beneath the disk drive, is now disposed between the connector (1d) and the disk drive (6) within the housing (5). The printed circuit board (7) is connected to selected terminals of the connector (1 d) to receive requests, in the form of signals, from the electronic digital signal processor and is connected to the actuator motor (9f), the disk motor (10) and the transducers (9d4) of the hard disk drive, to provide required control signals therefor. A preferred embodiment is of the PCMCIA form factor, 54 mm wide, 85.6 mm long and 5 mm thick, employing a PCMCIA connector (1d) as the electrical interface and a 1.3 form factor hard disk drive (6) as the rotating memory file. The hard disk drive memory cassette (1) is of the same size and shape as a solid state memory cassette of the same form factor and may be substituted therefor.

## Description

### Technical Field

This invention relates to memory cassettes for electronic digital processors and particularly to hard disk drive memory cassettes as substitutes or replacements for solid state PCMCIA types of memory cassettes for desk top or mobile computing systems, such as, notebook, palm top and pen based computers.

### Background Of The Invention

Presently known memory cassettes of the PCMCIA form factor are of the solid state type. They are provided with electrical connectors, such as multi-pin, plug or receptacle, and are dimensioned to be bodily inserted into the housing of an electronic digital processor to connect with the processor connector therein and thereby be electrically integrated with and become a functional part of the electronic digital processing system. Such solid state memory cassettes are referred to as "flash RAM", identifying a solid state, random access memory.

By providing a solid state, plug connected external memory, rather than an internal memory, the functional capacity of the small form factor type of, electronic digital processor is increased and, having pluralities of differing memory cassettes, differing types of data processing capabilities for a single electronic digital processor are possible.

Limitations in the storage capacity of these solid state memories however, correspondingly limits the functional scope of the processor.

### Summary Of The Invention

Enlargement of the scope of the data processing capabilities of small form factor processors, for applications as referred to herein, is achieved in the provision of a rotary actuator type of rotating memory file in memory cassette form, in the PCMCIA form factor, which greatly enlarges the storage capacity of the memory cassette, referred to herein as a hard disk drive memory cassette. This hard disk drive memory cassette is of substantially the same size and configuration as the solid state memory cassette it is intended to replace, is insertable into the housing of the electronic digital processor and has an electrical connector, which is the mating half of the connector in the electronic digital processor, to be electrically connected with and become a part of the electronic digital processing system.

The hard disk drive memory cassette comprises a main frame or base structure with side walls of rectangular planform, which is the mechanical backbone of the hard disk drive memory cassette and which supports on its inner face, between the side walls, at least a hard disk drive, a printed circuit board for the hard disk drive, also referred to as an integrated circuit, and the connector.

In the PCMCIA card form factor, the hard disk drive is a rotary actuator type of disk drive of 1.3 form factor. The rotary actuator is driven by an axial gap actuator motor, commonly known as a "voice coil" motor. A salient pole stator, DC motor, has an umbrella shaped, spot magnetized, permanent magnet rotor, driven at constant speed, which mounts a single hard disk. The actuator comprises an armstack of two axially spaced load beams which straddle the disk, one above the disk and one below the disk, each load beam mounting a transducer at its distal end for scanning the disk. Embedded servo code defines individual tracks in each disk surface. The servo code is scanned by the transducers for track seeking and track following purposes, in preparation for data read or write functions in selected track sectors.

In the presently known best mode for practicing this invention, the hard disk drive is disposed on the inner face of the base structure, at one end, with the disk rotatably mounted adjacent one side or edge of the base structure and the actuator rotatably mounted adjacent the other side or edge of the base structure. The connector receptacle part of the PCMCIA connector, which in itself is sealed, is disposed on the inner face, at the remaining end of the base structure, between the side walls, where it is sealed to the inner face and the side walls of the base structure.

The printed circuit card or board, normally affixed to the bottom face of the disk drive, is now disposed on the inner face of the base structure between the connector and the hard disk drive. Electrical connections couple the pin receptacle terminals of the connector to the printed circuit board. Other electrical connections couple the printed circuit board to each of, the disk motor, the rotary actuator motor and the transducers.

The printed circuit board comprises a disk controller or micro processor and other circuits which conventionally translate requests for reading or writing of information, received from the electronic digital processor via PCMCIA the connector, into track and track sector locations and time the reading or writing of information in a selected track at a selected track sector.

The disk drive in communication with the electronic digital processor, may store all information for the processor, including user data, operating systems and computer applications data. As described herein, space may also permit installing the solid state RAM, conventionally containing the operating systems and computer applications data, to further enlarge the storage capacity of the hard disk drive memory cassette.

The base structure is preferably an integral structure provided with a flat outer surface, side walls and an end wall. The end wall is located at the end of the base structure at which the hard disk drive is mounted. The side and end walls stiffen the base structure. A cover, having a flat outer surface, is secured and sealed to the connector and to the end and side walls, completing the encapsulation and sealing of the hard disk drive assembly. The dimensions, length, width, and thickness of the hard disk drive memory cassette, in the preferred embodiment, representing the presently known best mode for practicing the invention, correspond to those of the solid state PCMCIA memory cassette, whereby the hard disk drive memory cassette is also insertable into the housing of the electronic digital processor. The PCMCIA connector which is an accepted, standard interface for the solid state memory cassette, is also functionally acceptable for use with the hard disk drive memory cassette as an electrical coupler between the electronic digital processor and the printed circuit board of the hard disk drive.

### Brief Description of the Drawings

A better understanding of this invention will be had by reference to the following specification when considered in conjunction with the accompanying drawings in which;
Fig. 1 is an isometric view of the external configuration of a PCMCIA type of memory cassette.
Fig. 2 is a plan view, with the top cover removed, of a hard disk drive memory cassette embodying the principles of this invention.
Fig. 3 is a longitudinal cross section, only of the housing, of the hard disk drive memory cassette of Fig. 2 presenting an elevational view of the low profile interior of the cassette.
Fig. 4 is a view in the section plane IV-IV of Fig. 2, and
Fig. 5 is a view in the section plane V-V of Fig. 2.

### Description of the Preferred Embodiment

The term electronic digital processor as employed herein is intended to include any digital electronic device for digital signal processing, including, for example, data processing applications, computer applications, communications applications, etc., requiring the storage and retrieval of information in digital or discrete signal form in operation.

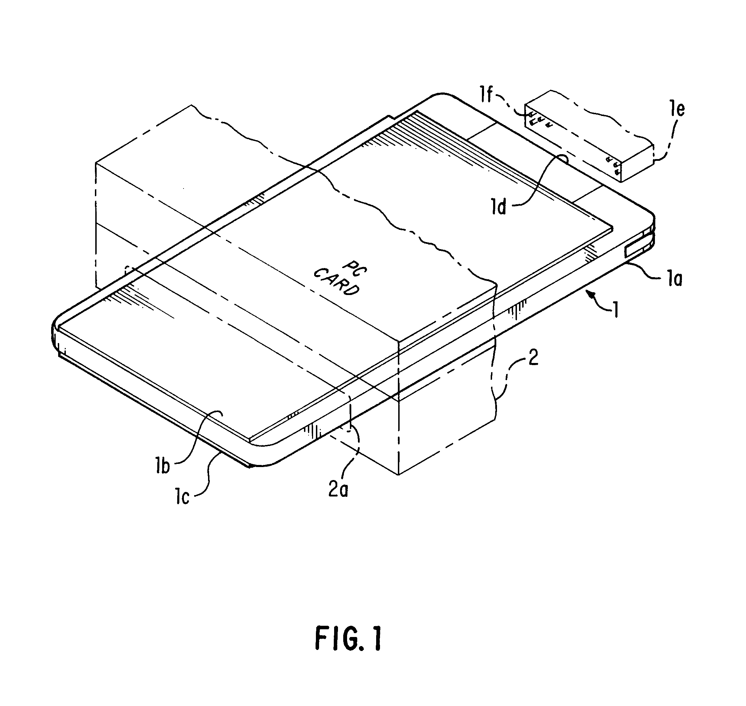

The term cassette, as here employed, refers to a container or housing for a hard disk drive which is of the same size and shape as the solid state memory cassette which it is to replace. Fig. 1, is an isometric view of one type of solid state memory cassette 1, called a PC Card, which is adapted for insertion into a housing 2, shown in dot dash outline, of an electronic digital processor via a slot 2a.

The PC Card comprises a frame 1a, top and bottom covers 1 and 1 c, and a PCMCIA connector 1 d in the front end of the frame 1 a. In practice, the connector 1 is the connector receptacle of a connector pair, the plug connector 1 of which is located in the housing 2 of the electronic digital processor and comprises a plurality of pins 1f. The depth of penetration of the solid state memory cassette into the housing 2 depends upon the distance between the end of the housing 2 at the slot 2a and the plug connector 1 in the housing. For a PCMCIA form factor solid state memory cassette, having length, width and thickness dimensions of 85.6 mm, 54.0 mm, and 5.0 mm, respectively, the minimum recommended depth of penetration of the PC Card into the housing 2, after engagement of the connector plug 1 with the connector receptacle 1d, is about 40 mm. Preferably, only a sufficient portion of the trailing or back end of the PC Card protrudes from the slot 2a in the housing 2, to permit a finger tip grasp to achieve PC Card removal. The substitution of PC Cards of differing types of information in memory enlarges the functional scope of the electronic digital processor.

While not illustrated in Fig. 1, the solid state memory electronics are sealed within the frame 1 and the top and bottom covers 1 and 1 c. The solid state memory electronics are connected to the pin receptacles of the connector receptacle 1 d. The PCMCIA connector is a 68 pin connector.

In the presently known best mode for practicing this invention, a hard disk drive and its electronic circuitry are fitted into a cassette housing of the type of Fig. 1 and of a PCMCIA form factor, as defined above.

### Hard Disk Drive Memory Cassette

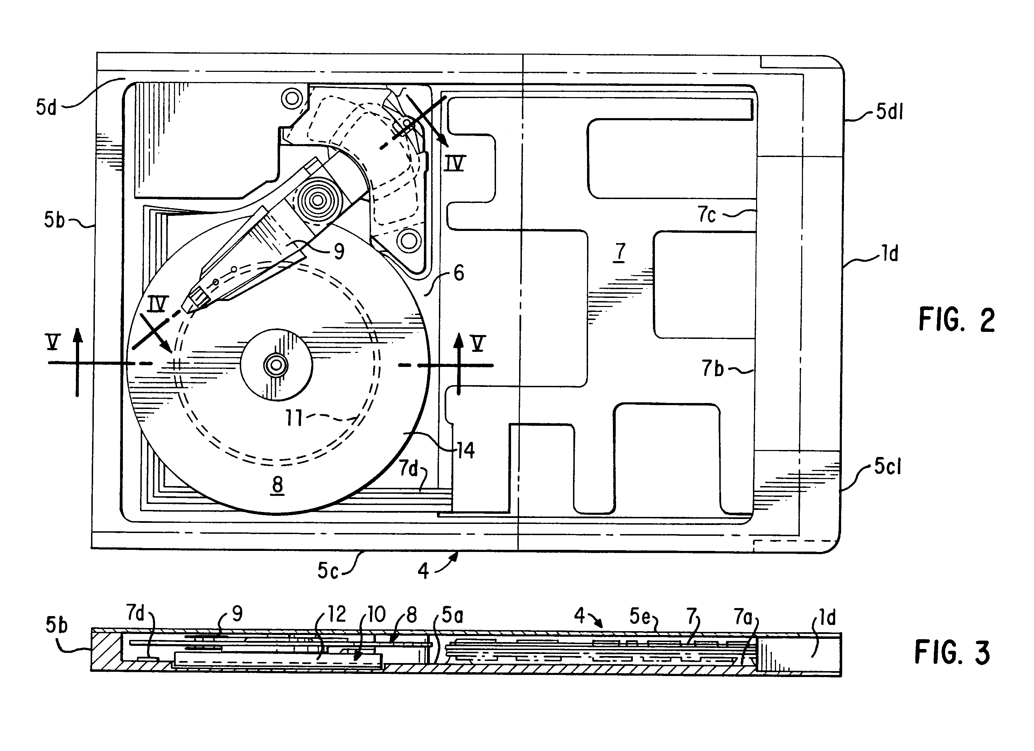

Figs. 2 and 3 illustrate plan and sectional views, respectively, of a small form factor, hard disk drive memory cassette embodying the principles this invention. These figures are drawn to a greatly enlarged scale to permit the illustration of essential detail.

A main frame or base structure 5 of metal, which is the backbone, i.e., the primary structural member of the cassette structure, is preferably a single piece of milled or molded metal, preferably of non-magnetic material, such as aluminum, having a base plate 5a, an end wall 5b and side walls 5c and 5d. The end wall 5b and the side walls 5c and 5d, being an integral part of the base plate 5a, increase the stiffness of the mainframe 5 with respect to bending. This, together with careful recessing of the inner surface 5a1 of the base plate 5a, to generally maintain an overall maximum base plate thickness, provides a support which is stable in configuration and in dimension for a rotary actuator type of hard disk drive 6. The base plate 5a has a flat bottom or outer surface 5a2.

As seen in Figs. 2 and 3, the hard disk drive memory cassette 4 comprises, at the left end of the main frame 5, as viewed, a hard disk drive 6 and at the right end, as viewed, the connector 1 d. The hard disk drive 6 is secured to the inner surface 5a1 of the base plate 5a. The connector 1 d is secured and sealed to the inner surface 5a1 of the base plate and is secured and sealed at its ends to inwardly directed portions 5c1 and 5d1 of the sidewalls 5c and 5d.

A printed circuit board 7 for the disk drive is disposed on the inner surface 5a1 of the base plate 5a between the hard disk drive 6 and the connector 1 d. The printed circuit board 7 may be adhesively secured to the inner surface 5a1 of the base plate, as at 7a, Fig. 3. Electrical connections, such as 7b and 7c, Fig. 2, connect the printed circuit board 7 to the connector 1 d. A flat flexible electrical cable 7d connects the printed circuit board 7 to the hard disk drive 6. The printed circuit board for the disk drive comprises electronic systems and circuits, including a disk controller or micro processor, providing a processing and control function for translating requests for reading or writing from the electronic digital processor 2, into track and track sector indications, providing controls for track seeking and track following, and, during track following, providing sector identity and timing controls for read/write modes of operation, all in response to communications from the host computer or electronic digital processor.

A cover 5e is secured, as by adhesive bonding, to the upper edges of the end wall, the side walls and the connector 1 d, to seal and further stiffen the cassette housing 1.

The hard disk drive 6 comprises a hard disk assembly 8 and a rotary actuator assembly 9.

The hard disk drive of the memory cassette may store only user data or may store user data and operating system and computer application data. Further, the memory cassette may contain a solid state memory such as the conventional RAM with shared terminal connections or separated connections with respect to the disk drive. RAM or disk drive addresses provided by the electronic digital processor separate communications by identifying the RAM or the disk drive.

### Hard Disk Assembly Of The Hard Disk Drive

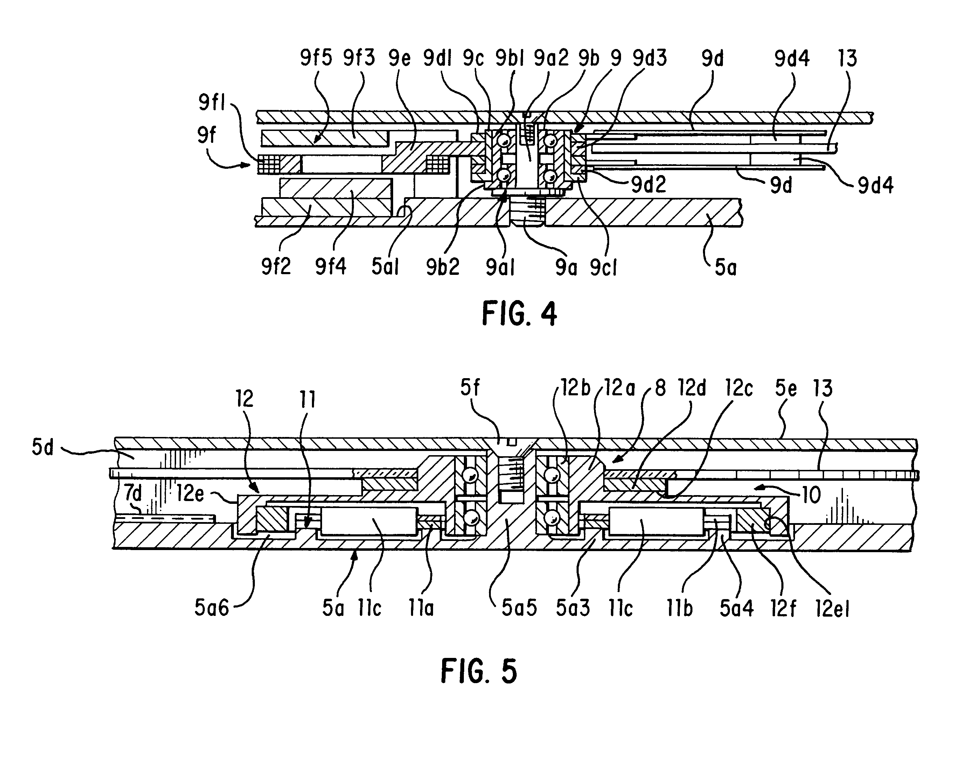

The hard disk assembly 8, Figs. 2, 3, and 5, comprises a salient pole direct current motor 10 which has a salient pole stator 11, Fig. 5, and an umbrella shaped, disk motor rotor 12. A hard disk 13 is secured to the rotor 12.

The salient pole stator 11 is a laminated structure comprising a circular center section 11 a and individual salient poles 11 b. The circular center section 11 a of the salient pole stator seats upon and is secured to an annulus 5a3 on the base plate and the end of each of the salient poles 11 b seats upon and is secured, as by adhesive bonding to an annulus 5a4 on the base plate 5a. Each salient pole 11 b is provided with a winding 11 c.

The umbrella shaped disk motor rotor 12 has a hub 12a which is journaled by an axial bearing pair 12b on a spindle 5a5, shown as an integral part of the base plate 5a. An annular axial face 12c, formed about the hub 12b, provides a supporting surface for the hard disk 13. The hard disk 13 may be directly adhesively bonded to the axial face 12c of the rotor, however, improved flatness in mounting the disk is achieved by employing a spacer 12d of superior flatness to the flatness of the axial face 12c, achieved by lapping. The spacer 12d is adhesively bonded to the hard disk 13 and the axial face 12c. The disk may be of metallic material, such as aluminum, or may be of non metallic material such as the known ceramics or glass, glass being preferred. The disk motor rotor 12 has a peripheral, depending annulus 12e, the bottom edge of which projects into an annular recess 5a6 in the inner surface 5a1 of the base plate 5a.

The disk motor rotor 12 is of a magnetic flux conducting material, such as steel. This peripheral annulus 12e has mounted on its inner peripheral face 12e1 an annular ring 12f of magnetic material which is spot magnetized in equally circumferentially spaced locations, greater in number than the number of salient stator poles 11 b. The annular ring 12f encircles the pole ends of the salient poles 11 b, providing radial gaps therebetween. Spot magnetization of the annular ring 12f is radial, alternately north-south, south-north. The magnetic flux conducting rotor provides the outer magnetic circuit for a flux return path for the salient pole motor. The windings 11 are conventionally energized to rotate the rotor 12 at a selected constant speed. An axial gap disk motor is also feasible by extending the salient pole ends into and onto the face of the recess 5a6. In the axial gap configuration, the ring 12f is reduced in thickness and increased in radial dimension. The ring is spot magnetized in the axial direction.

The distal end of the disk motor spindle 5a5, Fig. 5, contacts the cover 5e and is secured to the cover by a screw 5f. This provides additional support for the cover, particularly with respect to squeezing in handling, as well as providing a secure anchor for the distal end of the disk motor spindle 5a.

### Rotary Actuator Of The Hard Disk Drive

Fig. 4 illustrates the essential details of the rotary actuator assembly 9. The rotary actuator assembly 9 is journaled to rotate about a spindle 9a which threads into the base plate 5a against a spindle flange 9a1. The upper end 9a2 of the spindle 9a has press-fitted, shrink fitted or preferably adhesively bonded, thereon an axially spaced bearing pair 9b, having a common outer bearing race 9b1 terminating in a shoulder or flange 9b2 which seats upon the spindle flange 9a1. This flange 9b2 provides an axial reference on the spindle assembly for axially positioning the actuator arm stack in precise relationship with respect to the disk 13.

The actuator arm stack comprises a tubular cylindrical hub 9c which is provided with a flange 9cl which seats upon the outer bearing race flange 9b2 and mounts the load beam arm structures 9d of the rotary actuator assembly 9. The load beam arm structures 9d each have a mounting end defined by a mounting ring 9d1 which each slip over the outer cylindrical surface of the hub 9c. Precise axial disposition and axial spacing of the load beam arm structures 9d on the hub 9c are provided, respectively, by a hub spacer ring 9d2 and a hub spacer ring 9d3, which latter is the mounting end of an actuator motor arm 9e. The mounting rings 9d1 of the load beam arm structures 9d are fitted on the cylindrical hub 9c in the sequence shown. The assembly is jigged for precise alignment and a swaging tool or ball is forced axially through the cylindrical hub expanding the hub to secure the assembly. The tubular cylindrical hub is fitted about the outer bearing race 9b1 and seated upon the flange 9b2, in which position the assembly is adhesively bonded.

When assembled as shown, the load beam structures 9d straddle the disk 13, one above the upper disk surface and one below the lower disk surface. A transducer 9d4 is mounted on the distal end of each load beam arm structure 9d in a spring loaded position to fly on the air bearing of the disk and to scan the adjacent surface of the disk 13 as the disk rotates.

An axial gap, direct current actuator motor 9f, commonly termed a "voice coil" motor, comprises a flat coil 9f1 which is secured to the distal end of the actuator motor arm 9e and swings in a plane in an arc about the axis of the actuator spindle 9a, between the lower and upper poles 9f2 and 9f3 of a permanent magnet stator 9f5 structure secured to the inner face 5a1 of the base plate 5a. A permanent magnet 9f4, disposed upon the lower pole 9f2, provides a magnetic field which links the coil 9f1 and both poles 9f2 and 9f3 of the permanent magnet stator structure 9f5. When the coil 9f1 is energized with direct current of one polarity or the reverse, the electromagnetic field of the coil interacts with the permanent magnet field to move the coil in one direction or the reverse in a plane between the lower and upper poles 9f2 and 9f3, in an arcuate path about the axis of the spindle 9a. Control of the coil current is conventional for track seeking and track following purposes. The upper end 9a2 of the spindle 9a is preferably extended to engage the cover and be secured thereto, as by adhesive bonding, as in the case of the disk motor spindle 5a5. Cover support to provide resistance to squeezing is essential since the cover in a presently preferred embodiment of this invention is about 0.020 inches thick (about 0.5 mm).

In the presently contemplated best mode for practicing this invention the hard disk drive is of a 1.3 form factor. The overall thickness of the assembly, between the top and bottom outer faces is 5 mm, which is the thickness of one type of PC Card. In the PC Card application, the top cover 5e is of aluminum and is about 0.5 mm thick. The thickness of the base structure 5 at the bottom of the recess 5a6 is about 0.5 mm. The disk 13 is preferably of glass, although ceramic material or metal, such as aluminum may be employed, and is about 0.381 mm thick. The clearance between the bottom surface of the disk 13 and the disk motor rotor 12 is about 0.75 mm. The clearance between the top surface of the disk 13 and the inner surface of the top cover 5e is about 0.9 mm. The dimensions 0.75 mm and 0.9 mm clear the load beam 9d and the transducer 9d4 of each arm structure 9d. The thickness of the depending annular rim 12e of the disk motor rotor 12 is about 1.7 mm, leaving a clearance of about 0.25 mm between the bottom of the depending annular rim 12e of the disk motor rotor 12 and the face of the recess 5a6 thereat.

In reference to Figs. 2 and 3, the printed circuit board is described as a single board for controlling disk drive functions in response to requests from the host electronic digital processor 2, describing the user data together with the operating system and some computer application data as being loaded on the disk. As an alternative, since space permits, the storage capacity may be increased by adding a solid state printed circuit such as the conventional RAM containing some if not all of the operating system and computer application data. Such a circuit board, as seen in dot-dash outline in Fig. 3, is stacked with the printed circuit board 7 in a position therebelow and connected to the connector 1 d. The connector terminals may be grouped. One group for the hard disk drive and a second group for the solid stated printed circuit board. The connector pin groups are selectively addressed by the electronic digital processor as a preliminary step in accessing the rotating or solid state memories. Alternatively, where dictated by pin supply, the pins may be shared, a single pin being connected to both the RAM and the disk drive. In both instances, i.e., pin grouping or pin sharing, an address signal from the electronic digital computer or processor, addresses only the RAM or the disk drive to obviate misdirecting communications.

The specific organization of parts within the cassette housing represents the presently known best mode for practicing the invention. By disposing the printed circuit board(s) between the connector and the disk all conductor runs are shortened which is desirable. The disk drive may be reversed in disposition in the housing to shorten the flexible conductor 7d.

## Claims

1. A hard disk drive memory cassette (1) for insertion in a slot (2a) of predetermined cross section in a housing (2) of an electronic digital processor, to connect said hard disk drive memory cassette (1) with an electrical conn- nector (1 e) in said electronic digital processor, comprising:
a. a base structure (5) having a base plate (5a), an end wall (5b), and side walls (5c,5d), said side walls terminating adjacent the remaining end of said base plate which is opposite said end wall, said base plate (5a) having an inner face (5a1) between said end wall and said side walls and a substantially flat outer face;
b. connector means (1 d) secured to said inner face (5a1) of said base plate (5a) and said side walls (5c,5d) at said remaining end of said base plate, said connector means (1 d) having a plurality of terminals and being adapted for connection with said connector in said electronic digital processor;
c. a disk drive (6) comprising a hard disk assembly (8) and a rotary actuator assembly (9);
d. said hard disk assembly (8) comprising a disk motor (10) having a salient pole stator (11) secured to said inner face (5a1) of said base plate (5a), a disk motor rotor (12) rotatably mounted concentrically of said salient pole stator (11) and magnetically coupled thereto, and at least one hard disk (13) secured to said disk motor rotor (12), said salient pole stator (11) having a plurality of salient poles (11 b), each salient pole (11 b) having a pole end, the pole ends being circumferentially spaced, each salient pole having a winding (11 c);
e. said rotary actuator assembly (9) having a rotary actuator hub (9c) rotatably mounted on said inner face (5a1) of said base plate (5a) adjacent said end wall (5b) and the remaining side wall (5d) which is opposite said one side wall (5c), a rotary actuator arm structure (9d) secured to said hub (9c), said rotary actuator arm structure (9d) comprising a pair of load beams (9d) one load beam (9d) on each side of said disk and a transducer (9d4) on the distal end of each load beam (9d);
f. an axial gap actuator motor (9f) having a substantially flat coil (9f1) secured to and supported by said rotary actuator hub (9c) substantially diametrically opposite to said pair of load beams (9d) and a permanent magnet field structure (9f5) having pole pieces (9f2,9f3) on opposite sides of said coil (9f1) secured to said inner face (5a1) of said base plate (5a);
g. integrated circuit means (7) disposed between said connector means and said hard disk drive for providing track seeking, track following and read/write control for said hard disk drive;
h. electrical connections between said integrated circuit (7) and said connector means (1 d);
i. electrical connections (7d) between said integrated circuit and each of, said coil, said transducers, and each salient pole winding, and
j. a cover (5e) secured to said end wall (5b), said side walls (5c,5d) and said connector means (1 d), said cover having a substantially flat outer face and defining with said side walls (5c,5d) and said base plate (5a) a hard disk drive memory cassette enclosure of a cross-section which fits within said slot (2a) of said electronic digital processor (2) so that said hard disk drive memory cassette (1) may be inserted into said electronic digital processor (2) through said slot (2d) to engage said connector means (1 d) of said hard disk drive memory cassette (2) with said connector (1 e) of said electronic digital processor (2).

2. The invention according to claim 1, in which:
a. the rotatable mounting of said disk motor rotor (12) comprises a disk motor spindle (5a5) on said inner surface (5a1) of said base plate (5a) and bearings (12b) jour- naling said disk motor rotor (12) on said disk motor spindle (5a5).

3. The invention according to claim 2, in which: a. said disk motor spindle (5a5) is integral with said base plate (5a).

4. The invention according to claim 3, in which: a. said cover (5e) is also secured to the distal end of said disk motor spindle (5a5).

5. The invention according to any one of the preceding claims in which:
a. said disk motor rotor (12) comprises a ring (12f) of magnetizable material concentrically disposed of said disk motor rotor (12) in a position spaced from the pole end of each salient pole (11 b);
b. said ring (11f) of magnetizable material being spot magnetized in equally circumferentially spaced locations different in number than the number of salient poles (11 b) in said salient pole stator.

6. The invention according to claim 5, in which: a. said ring (12f) of magnetizable material encircles the pole ends of the salient poles (11 b) and is radially spaced therefrom.

7. The invention according to claims 5 or 6 in which:
a. said ring (12f) of magnetizable material is radially alternately spot magnetized north-south and
b. said body portion of magnetic flux conducting material of said disk motor (12) provides a magnetic flux return path for said ring (12f) of magnetizable material.

8. The invention according to any one of the preceding claims in which:
a. said disk motor rotor (12) is umbrella shaped;
b. said body portion of said disk motor rotor (12) has a planar axial face (12c), and further including
c. means securing said hard disk (13) to said to said planar axial face (12c) of said of said disk motor rotor (12).

9. The invention according to claim 7, in which said means securing said hard disk to said planar axial face of said disk motor rotor comprises a flat, ring shaped axial spacer (12d) adhesively secured to said hard disk (13) and to said planar axial face (12c) of said disk motor rotor (12).

10. The invention according to claim 8, in which the adhesive comprises the sole means of securing said flat ring shaped axial spacer (12d) to said hard disk (13) and to said planar axial face (12c) of said disk motor rotor (12).
